# EUROPÄISCHE PATENTANMELDUNG

(11) **EP 1 413 964 A2**
(43) Veröffentlichungstag der Anmeldung: **28.04.2004**
(21) Anmeldenummer: 03022930.6
(22) Anmeldetag: 09.10.2003
(51) Int. Cl.: G06F 17/50

(54) **Verfahren und Vorrichtung zur automatischen Zuordnung von Datenelementen beim Modellieren eines technischen Systems**

(30) Priorität: 23.10.2002 DE 10249515; 24.09.2003 DE 10344368
(71) Anmelder: SIEMENS AKTIENGESELLSCHAFT, 80333 München (DE)
(72) Erfinder: Gauckler, Wolfgang, 73230 Kirchheim/Teck (DE); Görl, Herbert, 35285 Gemünden (DE); Hoffmann, Werner, Dr., 91074 Herzogenaurach (DE); Kögel, Götz, 70191 Stuttgart (DE); Schischmanjan, Stepan, 70619 Stuttgart (DE)

(57) **Zusammenfassung**

Ein technisches System wird durch mehrere generische Modelle (M, MS(KA), MS(SA), MA(SR), MK(K), MA(KR)) beschrieben, die miteinander in Beziehung (B, B1 bis B4) gesetzt werden. Über diese Beziehungen (B, B1 bis B4) "vererben" sich Zuordnungen von Informationen/Merkmalen zu Modellelementen. Der Ansatz ist grundsätzlich anwendbar für unterschiedliche Maschinenmodelltypen, wird aber beschrieben für hierarchische Komponentenmodelle. In diesen Modellen stellen Modellelemente Bauteile, Baugruppen usw. dar.

## Beschreibung

Die Erfindung betrifft ein Verfahren und eine zur Ausführung des Verfahrens vorgesehene Vorrichtung zur automatischen Zuordnung von Datenelementen beim Modellieren eines aus einer Mehrzahl von Komponenten gebildeten technischen Systems, z. B. einer technischen Maschine, einer technischen Einrichtung, einer technischen Anlage (im Weiteren technisches System genannt), anhand von Modellen.

Modelle von technischen Systemen erlauben durch Zuordnung von Informationen wie Datenelementen zu einzelnen Komponenten des technischen Systems eine Strukturierung der Datenelemente und ermöglichen den Zugriff auf die Datenelemente über die Auswahl der jeweiligen Komponente (auch Modellelement genannt). Im allgemeinen wird ein technische System anhand eines Modells z. B. eines hierarchischen Komponentenmodells oder eines hierarchischen Funktionsmodells näher beschrieben. Dabei kann eine Komponente oder ein Modellelement mehrfach vorkommen. Jeder Komponente ist die zugehörige Information in Form des Datenelements eindeutig und explizit zugeordnet.

Zur Modellierung verschiedener, aber im Wesentlichen gleichartiger technischer Systeme, wie z. B. einer Werkzeugmaschine, die zum einen mit nur einer Spindel und zum anderen mit Haupt- und Gegenspindel ausgebildet sein kann, oder z. B. eines Füllstandssensors, der zum einen als Ultraschallsensor und zum anderen als Schwimmsensor ausgebildet sein kann, werden separate Modelle erstellt. Mit anderen Worten: Gibt es zu einem technischen System, z. B. einer Werkzeugmaschine, mehrere kundenspezifische Maschinenausprägungen, so müssen beim einfachen Modellansatz zwei unterschiedliche Modelle erstellt und die Datenelemente in beiden Modellen den Komponenten zugeordnet werden. Dies führt zu einem besonders aufwendigen Projektieren derartiger Modelle. Nach bester Kenntnis der Anmelderin ist eine Lösung für das beschriebene Problem bisher nicht bekannt geworden. Tatsächlich wird das Problem bisher schlicht umgangen, indem mehr Projektierungsaufwand in die Erstellung einzelner, unabhängiger Modelle investiert wird.

Der Erfindung liegt folglich die Aufgabe zugrunde, ein besonders einfaches Verfahren zum automatischen Zuordnen von Datenelementen beim automatischen Modellieren anzugeben. Des Weiteren ist eine besonders einfach ausgeführte Vorrichtung zur Durchführung des Verfahrens anzugeben.

Die erstgenannte Aufgabe wird erfindungsgemäß bei einem Verfahren mit den Merkmalen des Anspruchs 1 gelöst. Hinsichtlich einer zur Ausführung des Verfahrens besonders geeigneten Vorrichtung wird die Aufgabe erfindungsgemäß mit den Merkmalen des Anspruchs 8 gelöst.

Die Erfindung geht von der Erkenntnis aus, dass sich jedes reale technische System, wie eine Maschine, eine Einrichtung, eine Anlage, aus einer Vielzahl einzelner Komponenten in Form von Bauteilen, Aggregaten, Organen, Funktionselementen, Sensoren und dergleichen zusammensetzt. Jede derartige Komponente ist wiederum für sich beschreibbar, indem die jeweilige Komponente anhand von charakteristischen Informationen oder Datenelemente, wie Abmessungen, Betriebsgrößen, Eigenschaften, beschrieben wird. Als weitere charakteristische Datenelemente kommen auch Maße und Gewichte sowie Funktionen wie z. B. ein Ventilhub oder eine Leistungsaufnahme eines Motors und auch Zusatzinformationen oder Referenzen auf Zusatzinformationen wie z. B. Handbücher, Einbauanleitungen, zugehörige Software usw. in Betracht. Jede Beschreibung einer solchen Komponente anhand des jeweils zugehörigen Datenelements oder mehrerer Datenelemente bildet vorzugsweise einen Datensatz.

Aus der Gesamtheit aller Komponenten wird durch Auswahl einiger Komponenten und deren Verschaltung ein technisches System gebildet. Die Gesamtheit aller Komponenten, welche nicht nur das betreffende technische System, sondern auch ein anderes gleichartiges technisches System bilden können, umfasst beispielsweise sämtliche Komponenten einer Baureihe oder eines Anbieters technischer Systeme, die beispielsweise sowohl Komponenten, welche der Anbieter selbst herstellt oder vertreibt, als auch Komponenten, die mit dem vom Anbieter hergestellten oder vertriebenen Komponenten gesteuert werden, aufweisen.

Aus der Gesamtheit aller Komponenten wird gegebenenfalls eine Untermenge von Komponenten ausgewählt, die für ein konkretes technisches System oder Teilsystem erforderlich sind. Diese Untermenge von Komponenten wird auch als Stück- oder Komponentenliste bezeichnet, welche ein anwendungsspezifisches und somit reales technisches System beschreibt. Die Komponentenliste umfasst beispielsweise all diejenigen Komponenten, wie z. B. eine oder mehrere Steuerungen, Aktoren und Sensoren zur Steuerung bzw. zur Überwachung des technischen Systems und des dem technischen System zugrunde liegenden technischen Prozesses sowie die dem technischen System selbst zugrunde liegenden Komponenten, wie z. B. Antriebe, Ventile, Reaktoren usw.

Zur Modellierung eines technischen Systems sind darüber hinaus mehrere Modelle vorgesehen, die zur Beschreibung Datenelemente umfassen. Dabei wird das technische System selbst und auch die jeweilige Komponente anhand mindestens eines Modells mittels der Datenelemente beschrieben. Die Modelle werden vorzugsweise in Stammmodelle und/oder anwendungsspezifische Modelle unterteilt. Unter Stammmodell wird insbesondere eine auch als generisches Modell bezeichnete Gattung eines technischen Systems und/oder einer technischen Komponente verstanden. Beispielsweise wird als Stammmodell eines technischen Systems eine "Kraftwerksanlage" definiert, wobei das Stammmodell "Kraftwerksanlage" wiederum hierarchisch in weitere Unter-Stammmodelle bis Erreichen eines elementaren Stammmodells für ein elementares technisches System unterteilt werden kann. Als elementare technische Systeme für das technische System "Kraftwerksanlage" werden beispielsweise eine "Kohlekraftwerksanlage", eine "Kernkraftwerksanlage", eine "Gas- und Dampfturbinenanlage" verstanden, die jeweils für sich durch ein zugehöriges elementares Stammmodell beschrieben werden.

Unter einem Stammmodell einer technischen Komponente wird beispielsweise eine Maschine oder ein Stellantrieb verstanden. Das Stammmodell einer "Maschine" kann wiederum Unter-Stammmodelle umfassen wie "Werkzeugmaschine", "Wartungs- und Reinigungsmaschine", die bis zum Erreichen eines Stammmodells für eine elementare Komponente hierarchisch weiter unterteilt werden. Mit anderen Worten: Stammmodelle oder generische Modelle sind abstrakte Modelle eines technischen Systems und/oder einer technischen Komponente, die in mehreren Ebenen hierarchisch aufgebaut sind.

Ein solches abstraktes Stammmodell oder generisches Modell ist im Detail dafür vorgesehen, sämtliche Informationen oder Datenelemente über die zugehörige Komponente und/oder über das zugehörige technische System aufzunehmen.

Um ferner die abstrakten Komponenten oder Bauteile (auch Basis- oder Stammkomponenten oder generische Komponenten genannt) in ihren unterschiedlichen Ausprägungen oder Eigenschaften beschreiben zu können, wird den Komponenten zusätzlich ein Kennzeichnungsmodell (auch Ausprägungsmodell genannt) zugeordnet. Mittels des Kennzeichnungsmodells wird vorzugsweise die jeweilige Komponente anhand von charakteristischen Informationen oder Datenelemente, wie Abmessungen, Funktionen, Betriebsgrößen, Eigenschaften, Gewicht, Funktion näher beschrieben.

Vorteilhafterweise werden die Stammmodelle der Komponenten und/oder des technischen Systems beliebig, beispielsweise in Abhängigkeit von Interaktionsmöglichkeiten zwischen den Komponenten des technischen Systems kombiniert. Solche Kombinationen von Stammmodellen der Stammkomponenten oder des Stammsystems werden als Beziehungen bezeichnet.

Zum Aufbau einer konkreten technischen Komponente oder eines konkreten technischen Systems sind zweckmäßigerweise zusätzlich zu den Stammmodellen anwendungsspezifische Modelle für die konkrete technische Komponente und/oder das konkrete technische System vorgesehen. Je nach Art und Aufbau der anwendungsspezifischen Modelle umfasst beispielsweise ein mögliches anwendungsspezifisches Modell für eine Komponente oder ein System die Anzahl der zur Realisierung der Komponente bzw. des Systems erforderlichen Bauteile z. B. in Form einer Stückliste. Daneben kann als weiteres anwendungsspezifisches Modell der Lieferungsumfang der konkreten technischen Komponente und/oder des technischen Systems in Form einer Lieferliste (auch Installations-Stückliste genannt) definiert werden.

Mit anderen Worten: Zur Modellierung einer konkreten technischen Komponente und/oder eines konkreten technischen Systems anhand mehrerer Komponenten werden mehrere Modelle, die in gleich-, höher- und/oder niedrigwertigen Ebenen zueinander in Beziehung stehen, verwendet.

Je nach Art und Aufbau sowie Hierarchiestruktur kann das eine Komponente oder ein technisches System repräsentierendes Datenelement direkt in der jeweiligen Ebene dem jeweils betreffenden Modell - Stammmodell und/oder anwendungsspezifisches Modell - zugeordnet und entsprechend hinterlegt sein. In einer bevorzugten Ausführungsform für eine einfache und schnelle Modellierung ist das Datenelement im Hinblick auf die Ausnutzung des zur Verfügung stehenden Speicherplatzes, aber auch zugunsten eines schnellen Auffindens demjenigen Modell zugeordnet, das in der Hierarchie in einer höheren, insbesondere in der höchsten Ebene oder in einer niedrigen, insbesondere in der niedrigsten Ebene steht.

Beim Modellieren des technischen Systems anhand der Beziehungen zwischen den verschiedenen Modellen wird das Datenelement eines Modells einer höheren Ebene automatisch einem mit diesem Modell in Beziehung stehenden anderen Modell einer gleich- und/oder niedrigwertigen Ebene zugeordnet oder umgekehrt. Das heißt, jedes Datenelement wird vorteilhafterweise nur einem einzigen Modell zugeordnet. Je nach Art der Modellierung kann dabei das jeweilige Datenelement nur einem einzigen Stammmodell aller Stammmodelle und einem einzigen anwendungsspezifischen Modell aller anwendungsspezifischen Modelle oder übergreifend über alle Modelle einem einzigen Modell - einem Stammmodell oder einem anwendungsspezifischen Modell - zugeordnet sein. Hierdurch ist sichergestellt, dass das Datenelement nur einmal hinterlegt wird, so dass Änderungen oder Aktualisierungen von Eigenschaften des Datenelements einfach und sicher und für alle betreffenden Modelle nur einmal auszuführen sind.

Mit anderen Worten: Ein konkretes technisches System wird anhand von mehreren Stammmodellen oder generischen Modelle, insbesondere Stammmodellen von Komponenten wie generischen Bauteilen, generischen Baugruppen und/oder Kombinationen von generischen Bauteilen und Baugruppen, die miteinander in gleich-, höher- und/oder niedrigwertigen Ebenen in Beziehung gesetzt werden, modelliert.

Über die Beziehungen werden Zuordnungen von Datenelementen, wie Informationen oder Merkmale von Modellelementen wie den Komponenten, vorteilhafterweise referenziert oder vererbt. Der Ansatz ist grundsätzlich anwendbar für unterschiedliche Modelltypen; vorliegend ist ein hierarchisches Modell in Art einer Baumstruktur beschrieben. Alternativ kann als Modelltyp auch ein Netzmodell oder ein anderer Modelltyp verwendet werden. In den Modellen sind Modellelemente als Komponenten wie Bauteile, Baugruppen usw. ausgebildet.

Bevorzugt wird eine konkrete elementare Beziehung, insbesondere eine strukturelle Beziehung zwischen einem der Stammmodelle und einem der anwendungsspezifischen Modelle ausgehend vom betreffenden anwendungsspezifischen Modell erzeugt und diesen zugeordnet. Alternativ oder zusätzlich wird zwischen mindestens zwei Stammmodellen eine abstrakte Beziehung erzeugt und diesen zugeordnet. Je nach Art der Modellierung wird vorteilhafterweise in einem weiteren Schritt nach Zuordnung der Beziehung zu den betreffenden Modellen, insbesondere zu deren Systemen und/oder Komponenten anhand einer Mehrzahl von Modellen, insbesondere von Stammmodellen und/oder anwendungsspezifischen Modellen einer oder mehrerer Komponenten und deren Beziehungen automatisch mindestens ein weiteres Stammmodell und/oder ein weiteres anwendungsspezifisches Modell einer weiteren Komponente und/oder eines technischen Systems erzeugt. Alternativ kann anhand von lediglich Stammmodellen einer oder mehrerer Komponenten ein Stammmodell eines technischen System erzeugt werden.

Die bezüglich der Vorrichtung zum automatischen Zuordnen von Datenelementen beim Modellieren gestellte Aufgabe wird gelöst, indem ein erster modellbezogener Speicher zur Hinterlegung der Modelle und ein zweiter datenbezogener Speicher zur Hinterlegung der Datenelementen vorgesehen sind, wobei den im ersten Speicher hinterlegten Modellen jeweils mindestens eine Beziehung zugeordnet ist, anhand derer das jeweilige im zweiten datenbezogenen Speicher hinterlegte Datenelement einem Modell einer höherwertigen Ebene zugeordnet ist, wobei anhand einer vorgebbaren Beziehung das betreffende Datenelement eines Modells einer höherwertigen Ebene automatisch einem mit diesem Modell in Beziehung stehenden Modell einer gleich- und/oder niedrigwertigen Ebene zuordbar ist. Vorteilhafterweise ist mindestens ein Programmcodemittel zur Erzeugung und Hinterlegung der jeweiligen Beziehung zwischen mindestens zwei Modellen vorgesehen. Des Weiteren ist bevorzugt ein Programmcodemittel zur Referenzierung und Hinterlegung des die Beziehung repräsentierenden Datenelements vorgesehen. Als Programmcodemittel dient beispielsweise in einer Datenbank die Verknüpfung von entsprechenden Datenfeldern. Für eine strukturierte Hinterlegung der Daten und Modelle ist der erste modellbezogene Speicher unterteilt in einen Speicher für Stammmodelle und einen Speicher für anwendungsspezifische Modelle.

Der Vorteil der Erfindung besteht insbesondere darin, dass der Erstellungsaufwand zur Modellierung eines aus mehreren Komponenten gebildeten technischen Systems deutlich reduziert wird. Sollen für mehrere konkrete Maschinen einer oder auch unterschiedlicher Baureihen Dokumente und/oder Informationen zusammengestellt als Datenelemente einer Stückliste zugeordnet werden, so muss dieser Vorgang nicht für jede einzelne Maschine oder jede einzelne Komponente vollständig durchgeführt werden. Durch die Modellhierarchie und die Zuordnung des Datenelements an das höchste oder niedrigste Modell mit Referenzierung auf die weiteren dieses Datenelement benötigenden Modelle können viele Zuordnungen automatisch generiert werden, da Informationen verallgemeinert werden und über Beziehungen zwischen den Modellen wieder konkreten Komponenten zuordbar sind.

Nachfolgend wird ein Ausführungsbeispiel der Erfindung anhand der Zeichnung näher erläutert. Darin zeigen:
- FIG 1: eine schematische Darstellung mehrerer Modelle zur Modellierung eines aus mehreren Komponenten gebildeten technischen Systems,
- FIG 2 und 3: eine schematische Darstellung der Verwendung von Modellen in einem Diagnosesystem für ein technisches System.

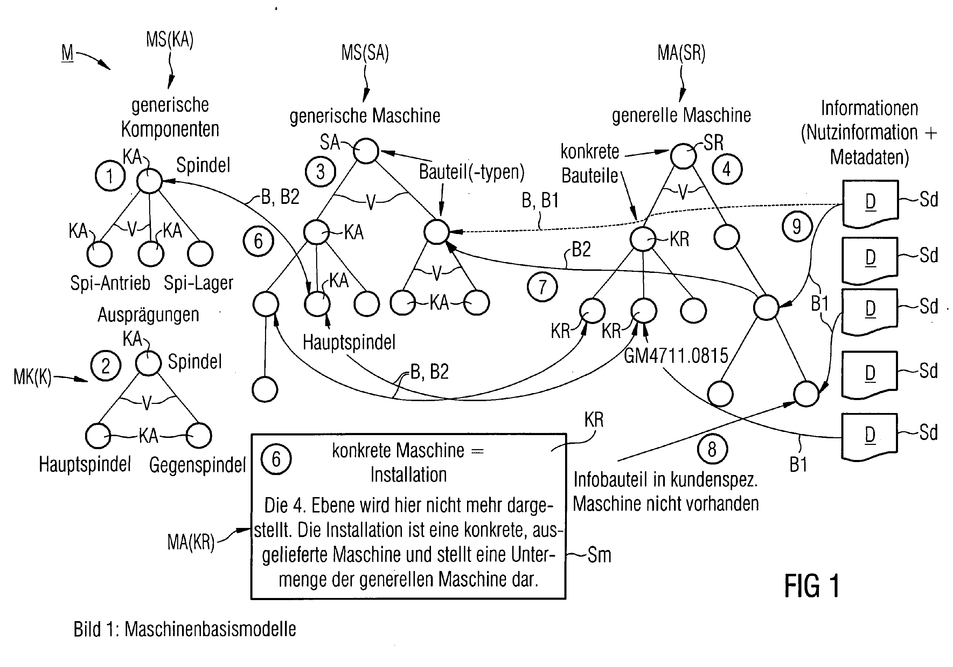

FIG 1 zeigt eine schematische Darstellung mehrerer Modelle M zur Modellierung eines aus mehreren Komponenten K gebildeten technischen Systems S, z. B. einer technischen Maschine oder einer technischen Anlage. Als Komponenten K umfasst das technische System S in nicht näher dargestellter Art und Weise Bauteile, Baugruppen, Einrichtungen, Sensoren, Aggregate, Antriebe, etc. oder Kombinationen aus diesen.

Zur Modellierung des technischen Systems S, z. B. einer Maschine, sind mehrere Modelle M vorgesehen. Die Modelle M sind unterteilt in Stammmodelle MS (auch generische Modelle genannt), die wiederum unterteilt sind in komponentenbezogene Stammmodelle MS(KA) und maschinen- oder systembezogene Stammmodelle MS(SA) (im Weiteren kurz abstrakte Stammmodelle MS(K), MS(SA) genannt), und in anwendungsspezifische Modelle MA, die wiederum unterteilt sind in komponentenbezogene anwendungsspezifische Modelle MA(KR) und maschinen- oder systembezogene anwendungsspezifische Modelle MA(SR) (im Weiteren kurz konkrete Modelle MA(K), MA(SR) genannt).

Bei der Komponente K eines komponentenbezogenen Stammmodells MS(KA) handelt es sich um Basiskomponenten oder generische Komponenten, die aus Basisbauteilen und/oder Basisbaugruppen bzw. generischen Bauteilen oder generischen Baugruppen gebildet sind.

In FIG 1 ist beispielhaft eine generische, auch abstrakt genannte Komponente KA (gekennzeichnet durch den mit "1" bezeichneten Kreis) zur Repräsentation einer Spindel dargestellt, die der Einfachheit halber ebenfalls als "Spindel" bezeichnet ist. Die abstrakte Komponente KA umfasst selbst wieder einzelne generische Bauteile und/oder generische Baugruppen, z. B. einen "Spindelantrieb" (kurz mit "Spi-Antrieb" bezeichnet) und ein "Spindellager" (kurz mit "Spi-Lager" bezeichnet).

Jede abstrakte Komponente KA wird darüber hinaus hinsichtlich ihrer jeweiligen Eigenschaften, Kenngrößen, Abmessungen, Funktionen, etc. anhand eines zugehörigen Kennzeichnungsmodells MK(K), auch Ausprägung genannt, näher beschrieben (siehe den mit "2" gekennzeichneten Kreis). In FIG 1 wird die als "Spindel" ausgeführte abstrakte Komponente KA in ihren Ausprägungen anhand der zugehörigen Kennzeichnungsmodelle MK(K) als "Hauptspindel" (kurz mit "Hauptspl." bezeichnet) und als "Gegenspindel" (kurz mit "Gegenspl." bezeichnet) näher beschrieben. Diese beiden generischen Unter- oder Teilkomponenten - Hauptspindel und Gegenspindel - basieren auf der zugrunde liegenden generischen oder abstrakten Komponente KA - der Spindel - und unterscheiden sich teilweise in den zugehörigen Datenelementen D.

Die Gesamtheit aller generischen oder abstrakten Komponenten KA und somit deren Stammmodelle MS(KA) und deren Kennzeichnungsmodelle MK(K) bilden eine Datenbasis, die im Folgenden, da sie generische Komponenten KA wie Bauteiltypen und Baugruppentypen umfasst, als Stammkomponentenbasis bezeichnet wird. Die Stammkomponentenbasis ist in nicht näher dargestellter Art und Weise als ein erster modellbezogener Speicher Sm ausgeführt. In dem ersten modellbezogenen Speicher Sm sind darüber hinaus vorzugsweise die anwendungsspezifischen Modelle MA(KR) und MA(SR) hinterlegt. Alternativ kann der erste modellbezogene Speicher Sm unterteilt sein in einen nicht näher dargestellten Speicher für die Stammmodelle MS(KA), MS(SA) und einen nicht näher dargestellten Speicher für die anwendungsspezifischen Modelle MA(SR), MA(KR).

Hinsichtlich weiterer Komponenten KR, KA sind die Möglichkeiten der zu repräsentierenden Informationen vielfältig. Dabei lassen sich einzelne, gleichartige oder ähnliche Komponenten KR, KA gruppenweise zusammenfassen. So ist eine Zusammenfassung z. B. sämtlicher Motoren und sämtlicher Ventile in einer jeweils entsprechenden Gruppe möglich und sinnvoll. Für sämtliche Komponenten KR, KA einer Gruppe ist dann ein entsprechender generischer oder abstrakter Komponententyp vorgesehen, der z. B. in Bezug auf die Motoren in Form der Datenelemente D Informationen zu Leistungsdaten, Drehzahlen und dergleichen und in Bezug auf die Ventile Informationen zum Ventilhub umfasst.

Diese spezialisierten abstrakten Komponententypen basieren auf der zugrunde liegenden, allgemeinen abstrakten Komponente KA, z. B. dem generischen Bauteil, das nur zur Aufnahme von Informationen im Hinblick auf eine Klartextbezeichnung der jeweiligen Komponente KA vorgesehen ist. Insofern ergibt sich eine hierarchische Beziehung innerhalb der abstrakten Komponententypen und Komponenten KA, die im Bereich der Programmierung, z. B. bei der so genannten objektorientierten Programmierung, als "Vererbung" bezeichnet wird. Die Bezeichnung Vererbung wird im Folgenden wie im Bereich der Programmierung verwendet und anhand eines Programmcodemittels derart erzeugt, dass das zugrunde liegende allgemeine generische Bauteil oder die abstrakte Komponente KA sämtliche Informationen an davon abgeleitete spezielle weitere abstrakte Komponenten KA oder an konkrete Komponenten KR weitergibt ("vererbt"). So ist entlang einer "Vererbungslinie" eine immer weitergehende Spezialisierung generischer Bauteile möglich. Schließlich ergibt sich auf diese Weise eine umfassende Kollektion generischer Bauteile, mit denen eine Modellierung auch komplexer technischer Systeme SA, SR möglich ist.

Im Detail wird dabei anhand der komponentenbezogenen Stammmodelle MS(KA) und/oder ggf. anhand der komponentenbezogenen Kennzeichnungsmodelle MK(K) ein systembezogenes Stammmodell MS(SA) (auch Systemmodell genannt) automatisch erzeugt (gekennzeichnet durch den mit "3" bezeichneten Kreis). Mit anderen Worten: In Art eines Baukasten mit vorkonfigurierten, aber veränderlichen, erweiterbaren und ergänzbaren generischen oder abstrakten Komponenten KA wird das systembezogene Stammmodell MS(SA) des technischen Systems S, z. B. für eine generischen Maschine erstellt. Das systembezogene Stammmodell MS(SA) umfasst nur generische und somit abstrakte Komponenten KA, die in der Stammkomponentenbasis enthalten sind.

Zusätzlich zur Auswahl der abstrakten Komponenten KA aus der Stammkomponentenbasis umfasst das systembezogene Stammmodell MS(SA) oder System- oder Basismodell Verknüpfungen V zwischen einzelnen generischen oder abstrakten Komponenten KA (Bauteiltyp oder Baugruppentyp), beispielsweise um die Funktionalität der zu modellierenden Maschine oder des abstrakten Systems SA abzubilden.

Zusätzlich zu den Stammmodellen MS(S), MS(KA) werden anwendungsspezifische Modelle MA(SR) eines technischen realen Systems SR automatisch erzeugt, die wiederum auf einer vorgegebenen Anzahl von anwendungsspezifischen Modellen MA(KR) von realen oder konkreten Komponenten KR beruhen (gekennzeichnet durch den mit "4" bezeichneten Kreis). In der FIG 1 wird das systembezogene konkrete Modell MA(SR) für eine "generelle Maschine" als technisches System S gezeigt. Eine solche "generelle Maschine" ist allerdings in der Praxis nicht realisierbar, weil sie z. B. sämtliche Varianten einer oder mehrerer konkreter Komponenten KR, die in einer konkreten Maschine zum Einsatz kommen können, umfasst.

Durch ein weiteres komponentenbezogenes anwendungsspezifisches Modell MA(KR) des technischen Systems S wird eine tatsächliche, konkrete Ausführungsform der zu modellierenden "generellen Maschine" näher beschrieben. Das komponentenbezogene konkrete Modell MA(KR) beschreibt in anderen Worten eine "konkrete Maschine" (gekennzeichnet durch den mit "5" bezeichneten Kreis) und stellt somit eine Untermenge der "generellen Maschine" und somit des systembezogenen konkreten Modells MA(SR) dar. Insbesondere wird mittels des komponentenbezogenen konkreten Modells MA(KR) eine ausgelieferte, konkrete Maschine beispielsweise in Form von Stücklisten näher beschrieben.

Die Modelle M, d. h. die Stammmodelle MS(S), MS(K), die Kennzeichnungsmodelle MK(K) und/oder die anwendungsspezifischen Modelle MA(S), MA(K), stehen in gleich-, höher- und niedrigwertigen Ebenen in Beziehungen B zueinander (gekennzeichnet durch die mit "6", "7", "8", "9" bezeichneten Kreise). Zwischen den einzelnen Modellen M existieren unterschiedliche Beziehungen B die der Zuordnung von Datenelementen D, wie Funktionen, Merkmalen, Eigenschaften, Abmessungen und/oder Informationen, innerhalb des abstrakten Systems SA und/oder des konkreten Systems SR und auf den unterschiedlichen Ebenen dienen.

Die abstrakten Komponenten KA der "generischen Maschine", also des abstrakten Systems SA, basieren auf den generischen Bauteilen oder generischen Baugruppen der Stammkomponentenbasis. Die zugrunde liegende Beziehung B (mit "6" bezeichnet) zwischen der abstrakten Komponente KA des komponentenbezogenen Stammmodells MS(KA) und der abstrakten Komponente KA des systembezogenen Stammmodells MS(SA) wird als Ausprägungsbeziehung derart bezeichnet, dass die abstrakten Komponente KA des Systems S "Ausprägung von" der abstrakten Komponente KA des Stamms ist. Ebenso basieren die konkreten Komponenten KR der generellen Maschine, also des konkreten Modells MA(SR), auf abstrakten Komponenten KA der generischen Maschine, also des systembezogenen Stammmodells MS(SA). Die zugrunde liegende Beziehung B (mit "7" bezeichnet) wird als Realisierungsbeziehung derart bezeichnet, dass die Komponente KR des realen Systems SR eine "Realisierung von" der abstrakten Komponente KA des abstrakten Systems SA , der "generischen Maschine", ist.

Mit anderen Worten: Mittels der Beziehungen B kann eine generische, abstrakte Komponente KA oder eine Stammkomponente Basis für ein oder mehrere reale oder konkrete Komponenten KR sein, wobei jede dieser realen Komponenten KR eine Instanz der generischen abstrakten Komponente KA ist.

Die Beziehungen B zwischen der konkreten "generellen Maschine", dem konkreten Modell MA(SR) und dem zugehörigen konkreten System SR, und der konkreten Komponente KR, also dem konkreten Modell MA(KR), ergibt sich dadurch, dass die Komponentenelemente der konkreten Komponente KR eine Untermenge der Elemente der "generellen Maschine" - des konkreten Systems SR - darstellen. Die Beziehung B (gekennzeichnet durch einen mit "8" bezeichneten Kreis) zeigt also an, welche konkreten Komponenten KR oder Elemente in der "generellen Maschine" - dem konkreten System SR - vorhanden oder nicht vorhanden sind.

Anhand der in Beziehung B zueinander stehenden Modellen M (einschließlich der spezifischen Modelle MS(KA), MS(SA), MK(K), MA(SR), MA(KR)) wird das Datenelement D eines Modells M, z. B. ein komponentenbezogenes Stammmodell MS(KA), einer höheren Ebene automatisch einem mit diesem Modell M in Beziehung stehenden anderen Modell M, z. B. ein systembezogenes Stammmodell MS(SA), einer gleich- und/oder niedrigwertigen Ebene zugeordnet oder umgekehrt.

Zur Hinterlegung der Modelle M ist der erste modellbezogene Speicher Sm vorgesehen. Die Datenelemente D sind in Abhängigkeit vom Aufbau und der Struktur in einem zweiten datenbezogenen Speicher Sd hinterlegt. Der zweite datenbezogene Speicher Sd kann separat ausgebildet sein. Alternativ können die Datenelemente D in dem jeweils zugehörigen ersten modellbezogenen Speicher Sm hinterlegt sein. Die verschiedenartigen Datenelemente D sind durch gleiche graphische Symbole dargestellt. Die Datenelemente D, d. h. deren Datensätze, umfassen jeweils Informationen, also insbesondere Nutzinformationen und Metadaten, zu einzelnen technischen abstrakten und konkreten Komponenten KA bzw. KR. Die in den Datenelementen D enthaltenen Informationen werden über eine zugehörige Beziehung B1 anhand eines Programmcodemittels zum einen dem Modell M mit der höchstwertigen oder niedrigstwertigen Ebene zugeordnet. Zum anderen wird das betreffende Datenelement D den anderen dieses Datenelement D ebenfalls betreffenden Modellen M anhand einer weiteren Beziehung B2 automatisch zugeordnet und somit referenziert. Das heißt, je nach Ebenenanordnung erfolgt die Zuordnung der Datenelemente D anhand der Beziehungen B ausgehend von einer Anfangsebene absteigend oder aufsteigend. Das Datenelement D wird dabei bevorzugt einer Komponente KA oder KR des jeweiligen Modells M zugeordnet.

Mit anderen Worten: Informationen, z. B. Dokumentationen zu einem Bauteil oder Merkmale, z. B. Merkmalsbeschreibungen für ein Diagnosesystem, welche Inhalt der Datenelemente D sind, werden nun nicht mehr der konkreten Komponente KR oder Maschine als Datenelement D zugeordnet, sondern werden entweder dem übergeordneten konkreten System SR (= "generelle Maschine") oder sogar, wenn die Information verallgemeinerbar ist, einer abstrakten Komponenten KA (= "generische Komponente") oder einem abstrakten technischen System SA (= "generische Maschine") zugeordnet. Über einen Generatorlauf kann nun ein Modell M für die konkrete Maschine oder Komponente KR mit den zugeordneten Datenelementen D dadurch gewonnen werden, dass bei jeder Komponente KR, KA überprüft wird, ob eine Beziehung B zu einem Element in einem anderen Modell MS(KA), MS(SA), MA(SR), MA(KR) höherer oder niedriger Abstraktionsebene existiert. Ist dies der Fall wird das der jeweiligen Beziehung B zugrunde liegende Datenelement D des betreffenden Modells M mit MS(KA), MS(SA), MA(SR), MA(KR) für das andere Modell M, z. B. für eine konkrete Komponente KR in eine Stückliste, übernommen.

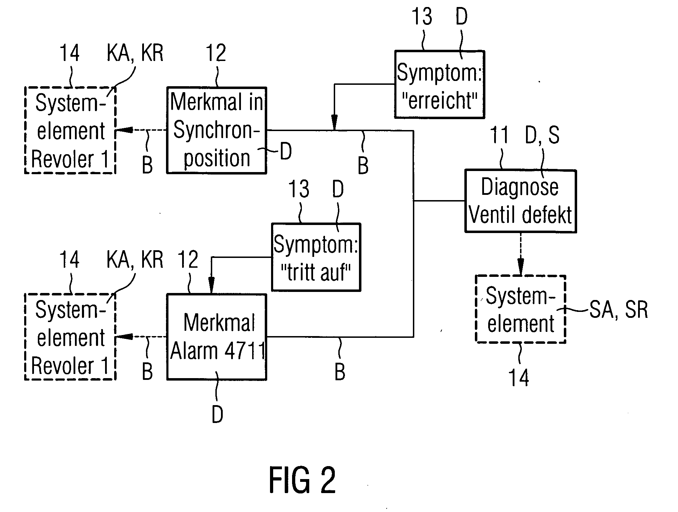

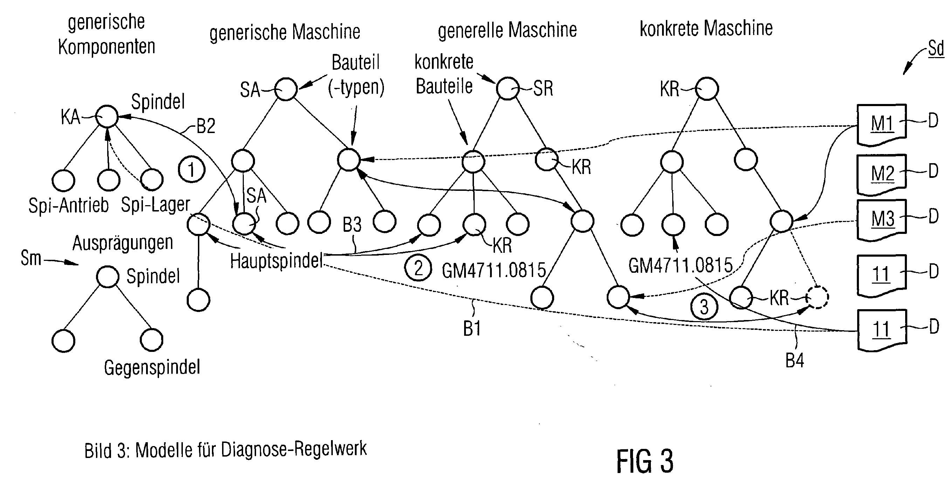

In den FIG 2 und 3 wird beispielhaft beschrieben, wie der erfindungsgemäße Ansatz mit generischen Modellen genutzt werden kann, um ein Regelwerk im Zusammenhang mit einem Diagnosesystem für technische Systeme S am Beispiel einer Werkzeugmaschine aus einem allgemein gültigen Regelwerk für eine konkrete Maschine abzuleiten. Für nähere Details zu einer "iterativen rechnergestützten Diagnose" wird auf die gleichnamige für den gleichen Anmelder der vorliegenden Erfindung eingereichten **Patentanmeldung vom ##.##.2000 (Aktenzeichen ### ## ### [Anmeldeaktenzeichen der 2002 14792])** verwiesen.

In FIG 2 besteht das Regelwerk im Kern aus einer Anzahl von Diagnosen 11 für ein technisches System S. Jede Diagnose 11 ist mit einer Anzahl von Datenelementen D in Form von Merkmalen 12 bzw. Symptomen 13 verknüpft. Diagnosen 11 und Merkmale 12 sind Systemelementen 14, z. B. Komponenten KR, KA des technischen Systems S, zugeordnet. Die Diagnosen 11 können anhand der Komponenten KA, KR und somit anhand von generischen Bauteilen oder generischen Baugruppen als generisches System S dargestellt werden. Auf diese Weise entsteht mit einer Stammdatenbasis, die in diesem Anwendungsfall als Diagnosendatenbasis bezeichnet wird, ein allgemeingültiges Regelwerk, das in ein installationsspezifisches Regelwerk transformiert werden kann. Dabei werden die Beziehungen B zwischen dem technischen System S, also eine Repräsentation einer Diagnose 11, und einer konkreten oder abstrakten Komponente KR bzw. KA, insbesondere einem Systemelement 14, zur Modellierung eines abstrakten Stammmodells MS(SA) oder eines konkreten Modells MR(SR), also dem Äquivalent der "generischen Maschine" bzw. der "generellen Maschine" entsprechend, zur automatischen Zuordnung der Datenelemente D, d. h. der Merkmale 12 und Symptome 13, verwendet. Die Merkmale 12 und Symptome 13 werden entsprechend angeordnet, d. h. im sich ergebenden Baum "vererbt" oder "umgehängt".

Im Beispiel gemäß FIG 3 ist ein Diagnose-Regelwerk zur automatischen Zuordnung der Datenelemente D dargestellt. Dabei wird das Merkmal M1 als Datenelement D verwendet. Eine der Diagnosen 11 ist einer abstrakten Komponente KA oder Stammkomponente - dem generischen Bauteil "Spindel" - zugeordnet. Durch eine Beziehung B1 wird der abstrakten Komponente KA als Datenelement D die Diagnose 11 zugeordnet, anhand derer eine weitere Beziehung B2 (auch mit einem mit "1" bezeichneten Kreis gekennzeichnet) zwischen dem komponentenbezogenen Stammmodell MS(KA) und dem systembezogenen Stammmodell MS(SA) aufgebaut wird. Hierdurch ergibt sich zwischen der Diagnose 11 als Datensatz der abstrakten Komponente KA - der "generischen Komponente" - eine Zuordnung zum abstrakten technischen System SA, in welche die abstrakte Komponente KA als "Hauptspindel" verwendet wird. Mittels der Beziehung B2 wird daher das Datenelement D der abstrakten Komponenten KA automatisch dem abstrakten systembezogenen Stammmodell MS(SA) zugeordnet.

Eine weitere Beziehung B3 (in FIG 3 mit einem mit "2" bezeichneten Kreis gekennzeichnet) zeigt an, dass die "Hauptspindel" - die abstrakte Komponente KA - durch ein konkretes Bauteil oder durch eine konkrete Komponente KR mit einer textuellen Bezeichnung "GM4711.0815" als Datenelement D realisiert ist. Diese konkrete Komponente KR ist auch in der "konkreten Maschine" oder dem konkreten System SR vorhanden. Dadurch kann die Diagnose 11 der konkreten Komponente KR mit der Bezeichnung "GM4711.0815" der Installationsstückliste anhand einer zugehörigen Beziehung B4 zugeordnet werden.

Bei diesen Transformationen kann es auch vorkommen, dass einzelne Diagnosen 11 als Äquivalente der Merkmale M1 bis M3 gelöscht werden, weil konkrete Komponenten KR in der "konkreten Maschine" oder dem konkreten System SR nicht vorhanden sind (z. B. durch fehlende Optionen). Ein Beispiel hierfür ist das Merkmal M3. Eine diesbezügliche Beziehung (in FIG 3 mit "3" bezeichnet) zeigt an, dass das Bauteil oder die Komponente KR, dem das Merkmal M3 zugeordnet ist, in der "konkreten Maschine" oder dem konkreten System SR nicht vorkommt. Das Merkmal M3 wird daher deaktiviert, dies ist durch die gestrichelte Linie dargestellt. Alternativ kann das Merkmal M3 gelöscht werden.

Zusammenfassend wird die Erfindung kurz wie folgt dargestellt:

Ein technisches System wird durch mehrere abstrakte und konkrete Modelle beschrieben, die miteinander in Beziehung gesetzt werden. Über diese Beziehungen "vererben" sich Zuordnungen von Informationen/Merkmalen zu Modellelementen. Der Ansatz ist grundsätzlich anwendbar für unterschiedliche Maschinenmodelltypen, wird aber beschrieben für hierarchische Komponentenmodelle. In diesen Modellen sind Modellelemente als Bauteile, Baugruppen usw. bezeichnet.

## Patentansprüche

1. Verfahren zum automatischen Zuordnen von Datenelementen (D) beim Modellieren eines eine Mehrzahl von technischen Komponenten (KA, KR) umfassenden technischen Systems (SA, SR) anhand von Modellen (M, MS(KA), MS(SA), MA(SR), MK(K), MA(KR)), die in gleich-, höher- und/oder niedrigwertigen Ebenen in Beziehung (B, B1 bis B4) zueinander stehen, wobei anhand einer vorgebbaren Beziehung (B, B1 bis B4) das Datenelement (D) eines Modells (M, MS (KA) , MS (SA) , MA(SR) , MK(K) , MA(KR)) einer höheren Ebene automatisch einem mit diesem Modell (M, MS(KA), MS (SA) , MA(SR) , MK(K) , MA(KR)) in Beziehung (B, B1 bis B4) stehenden anderen Modell (M, MS(KA), MS(SA), MA(SR), MK(K), MA(KR)) einer gleich- und/oder niedrigwertigen Ebene zugeordnet wird oder umgekehrt.

2. Verfahren nach Anspruch 1, wobei jedes Datenelement (D) nur einem einzigen Modell (M, MS(KA), MS(SA), MA(SR), MK(K), MA(KR)) zugeordnet wird.

3. Verfahren nach Anspruch 1 oder 2, wobei die Modelle (M, MS (KA) , MS (SA) , MA(SR) , MK(K) , MA(KR)) in Stammmodelle (M, MS(KA), MS(SA)) und anwendungsspezifische Modelle (MA(SR), MA(KR)) unterteilt werden.

4. Verfahren nach Anspruch 3, wobei zwischen einem der Stammmodelle (MS(KA), MS(SA)) und einem der anwendungsspezifischen Modelle (MA(SR), MA(KR)) ausgehend vom betreffenden anwendungsspezifischen Modell (MA(SR), MA(KR)) eine konkrete Beziehung (B, B3), insbesondere eine funktionale Beziehung (B3) erzeugt und zugeordnet wird.

5. Verfahren nach einem der Ansprüche 1 bis 4, wobei anhand einer Mehrzahl von Modellen (MS(KA), MA(KR)) und deren Beziehungen (B, B1 bis B4) automatisch mindestens ein Modell (MS(SA), MS(SR)) des technischen Systems (SA, SR) erzeugt wird.

6. Verfahren nach einem der Ansprüche 3 bis 5, wobei anhand von Stammmodellen (MS(KA)) einer oder mehrerer Komponenten (KA, KR) ein Stammmodell (MS(SA)) des technischen Systems (SA, SR) erzeugt wird.

7. Verfahren nach einem der Ansprüche 3 bis 6, wobei anhand von anwendungsspezifischen Modellen (MA(KR)) einer oder mehrerer Komponenten (KR) ein anwendungsspezifisches Modell (MA(SR)) des technischen Systems (SA, SR) erzeugt wird.

8. Vorrichtung zum automatischen Zuordnen von Datenelementen (D) beim Modellieren eines eine Mehrzahl von Komponenten (KA, KR) umfassenden technischen Systems (SA, SR) anhand von Modellen (M, MS(KA), MS (SA) , MA(SR), MK(K), MA(KR)), die in gleich-, höher- und/oder niedrigwertigen Ebenen in Beziehung (B, B1 bis B4) zueinander stehen, mit einem ersten modellbezogenen Speicher (Sm) zur Hinterlegung der Modelle (M, MS (KA) , MS (SA) , MA(SR) , MK(K) , MA(KR)) und einem zweiten datenbezogenen Speicher (Sd) zur Hinterlegung der Datenelementen (D), wobei den im ersten Speicher hinterlegten Modellen (M, MS(KA), MS(SA), MA(SR), MK(K), MA(KR)) jeweils mindestens eine Beziehung (B, b1 bis B4) zugeordnet ist, anhand derer das jeweilige im zweiten datenbezogenen Speicher hinterlegte Datenelement (D) einem Modell (M, MS(KA), MS(SA), MA(SR), MK(K), MA(KR)) einer höherwertigen Ebene zugeordnet ist, wobei anhand einer vorgebbaren Beziehung (B, B1 bis B4) das betreffende Datenelement (D) eines Modells (M, MS(KA), MS(SA), MA(SR), MK(K), MA(KR)) einer höherwertigen Ebene automatisch einem mit diesem Modell (M, MS(KA), MS(SA), MA(SR), MK(K), MA(KR)) in Beziehung (B, B1 bis B4) stehenden Modell (M, MS (KA) , MS (SA) , MA(SR) , MK(K) , MA(KR)) einer gleich- und/oder niedrigwertigen Ebene zuordbar ist.

9. Vorrichtung nach Anspruch 8, wobei mindestens ein Programmcodemittel zur Erzeugung und Hinterlegung der jeweiligen Beziehung (B, B1 bis B4) zwischen mindestens zwei Modellen (M, MS(KA), MS(SA), MA(SR), MK(K), MA(KR)) vorgesehen ist.

10. Vorrichtung nach Anspruch 8 oder 9, wobei ein weiteres Programmcodemittel zur Referenzierung und Hinterlegung des die Beziehung (B, B1 bis B4) repräsentierenden Datenelements (D) vorgesehen ist.

11. Vorrichtung nach einem der Ansprüche 8 bis 10, wobei der erste modellbezogene Speicher (Sm) unterteilt ist in einen Speicher für Stammmodelle (MS(KA), MS(SA)) und einen Speicher für anwendungsspezifische Modelle (MA(SR), MA(KR)).
